# EUROPÄISCHE PATENTANMELDUNG

(11) **EP 2 821 563 A1**
(43) Veröffentlichungstag der Anmeldung: **07.01.2015**
(21) Anmeldenummer: 14175362.4
(22) Anmeldetag: 02.07.2014
(51) Int. Cl.: E04G 21/20

(54) **Mörtelband**

(30) Priorität: 04.07.2013 AT 5622013
(71) Anmelder: Pichler, Ekkehart, 4082 Aschach (AT)
(72) Erfinder: Pichler, Ekkehart, 4082 Aschach (AT)
(74) Vertreter: KLIMENT & HENHAPEL

(57) **Zusammenfassung**

Mörtelband (1) mit Mörtel (2) und einem Träger (3) für den Mörtel (2), der als biegsamer, bandförmiger Träger (3) mit maschenförmiger oder offenporiger Oberfläche ausgeführt ist, wobei die Maschen oder Poren des bandförmigen Trägers (3) Ein- und/oder Durchtrittsöffnungen für den Mörtel (2) bilden. Erfindungsgemäß ist vorgesehen, dass der Mörtel mit den Maschen oder Poren des Trägers (3) eine zu beiden Seiten des bandförmigen Trägers (3) freiliegende, sowohl in Längs- als auch in Querrichtung biegsame Mörtelschicht bildet, die den Träger (3) durchdringt. Das erfindungsgemäße Mörtelband (1) wird im Zuge der Errichtung des Mauerwerks auf die aktuell oberste Mauersteinreihe aufgelegt, wobei es nach Wunsch zugeschnitten werden kann. Bei der Benetzung des Mörtelbandes (1) mit Wasser erfolgt unmittelbarer Wasserkontakt mit dem Mörtel (2), sodass die Härtungsreaktion sofort in Gang gesetzt wird. Die Errichtung des Mauerwerks wird auf diese Weise erheblich vereinfacht, sodass sich die erforderliche Arbeitszeit sowie die Kosten hierfür reduzieren.

## Beschreibung

Die Erfindung betrifft ein Mörtelband mit Mörtel und einem Träger für den Mörtel, der als biegsamer, bandförmiger Träger mit maschenförmiger oder offenporiger Oberfläche ausgeführt ist, wobei die Maschen oder Poren des bandförmigen Trägers Ein- und/oder Durchtrittsöffnungen für den Mörtel bilden, gemäß dem Oberbegriff von Anspruch 1.

Mörtel ist ein Gemisch aus einem Bindemittel, etwa Kalk oder Zement, Wasser, Gesteinskörnung wie etwa Sand, und allfälligen Zuschlagstoffen. Ein solches Gemisch liegt in der Regel als fertige Mörtelrezeptur vor, die auch als Trockenmörtel bezeichnet wird und pulverförmige Konsistenz aufweist. Nach der Zugabe von Wasser härtet der Mörtel rasch aus und dient in bekannter Weise zur kraftschlüssigen Verbindung von Mauersteinen eines Mauerwerks, um eine bessere Stabilität des Mauerwerks zu erzielen. Der Mörtel wird in bekannter Weise durch Beimengung von Wasser kurz vor der Verarbeitung angerührt und schichtweise auf die Lagerfuge einer Mauersteinreihe aufgetragen. Nach dem Auflegen einer weiteren Mauersteinreihe härtet der Mörtel aus und wird Teil des Mauersteinverbundes.

Das Anrühren des Mörtels mit gleichbleibender Qualität und das Auftragen des Mörtels in gleichmäßigen Schichtdicken stellt eine zeitaufwändige und somit kostenintensive Arbeit dar. Um diesen Aufwand zu reduzieren wurden daher Mörtelbänder vorgeschlagen, bei denen pulverförmiger Trockenmörtel von einer wasserlöslichen Umhüllung umgeben ist. Das Mörtelband wird auf eine Mauersteinreihe aufgelegt und mit Wasser benetzt. Das Wasser bewirkt die Zersetzung der wasserlöslichen Umhüllung und reagiert in weiterer Folge mit dem pulverförmigen Trockenmörtel, der daraufhin aushärtet. Ein Mörtelband dieser Art ist etwa aus der DE 10019264 A1 bekannt. Eine solche Ausführung verfügt jedoch über den Nachteil, dass die hierfür erforderlichen, wasserlöslichen Folien vergleichsweise teuer sind, wodurch der Kostenvorteil der geringeren Arbeitszeit aufgehoben wird. Des Weiteren muss beim Zuschneiden des Mörtelbandes auf eine gewünschte Länge die Umhüllung aufgeschnitten werden, wodurch pulverförmiger Trockenmörtel austritt und nicht nur eine Verschmutzung des Arbeitsbereiches verursacht, sondern auch den Kraftschluss des Mörtelbandes im zugeschnittenen Endbereich durch den Verlust an Mörtel verringert. Da die Benetzung des Mörtelbandes mit Wasser zumeist erst nach dem Auflegen des Mörtelbandes auf die oberste Mauersteinreihe erfolgt, besteht außerdem die Gefahr, dass bei unzureichenden Wassermengen die untere Seite der wasserlöslichen Folie nur unvollständig aufgelöst wird und eine starke Schwächung der kraftschlüssigen Verbindung in diesen Bereichen auftritt. Das Benetzen mit Wasser ist ebenfalls mit großer Vorsicht durchzuführen, da das Wasser bei zu raschem Auftrag von der Folie abrinnt, oder pulverförmiger Trockenmörtel aus der Lagerfuge ausgeschwemmt wird.

Ein gattungsgemäßes Mörtelband wird ferner in der DE 102004033945 A1 beschrieben. In der AT 400604 B wird eine wurstförmige Konfiguration beschrieben, bei der trocken abgemischtes Mörtelmaterial in porösen und wasserdurchlässigen Hüllen abgefüllt wird.

Es besteht daher das Ziel der Erfindung darin, das Errichten von Mauerwerk zu vereinfachen, und die erforderliche Arbeitszeit sowie die Kosten hierfür zu reduzieren. Des Weiteren soll der Einsatz von Rohstoffen vermindert und Abfallanfall vermindert werden.

Diese Ziele werden durch die Merkmale von Anspruch 1 erreicht. Anspruch 1 schlägt ein Mörtelband mit Mörtel und einem Träger für den Mörtel vor, der als biegsamer, bandförmiger Träger mit maschenförmiger oder offenporiger Oberfläche ausgeführt ist, wobei die Maschen oder Poren des bandförmigen Trägers Ein- und/oder Durchtrittsöffnungen für den Mörtel bilden. Erfindungsgemäß ist dabei vorgesehen, dass der Mörtel mit den Maschen oder Poren des Trägers eine zu beiden Seiten des bandförmigen Trägers freiliegende, sowohl in Längs- als auch in Querrichtung biegsame Mörtelschicht bildet, die den Träger durchdringt.

Erfindungsgemäß wird somit vorgeschlagen, den Mörtel in den Maschen oder Poren eines bandförmigen Trägers zu binden, sodass er gemeinsam mit dem Träger eine in Längs- als auch in Querrichtung biegsame Mörtelschicht bildet. Eine solche Biegsamkeit verbessert die praktische Anwendbarkeit des erfindungsgemäßen Mörtelbandes entscheidend, da es leichter an unterschiedliches Ziegelwerk angepasst werden kann und flexibler zu verarbeiten ist. Insbesondere in Querrichtung des Mörtelbandes hat sich die Biegsamkeit als vorteilhaft erwiesen. Die hierfür erforderliche Konsistenz des Mörtels kann ohne Zugabe von Wasser durch die Verwendung alternativer Lösungsmittel, wie sie aus dem Stand der Technik bekannt sind, hergestellt werden. Durch die Verwendung solcher wasserlosen Lösungsmittel, etwa ein geeigneter Alkohol, kann dem zunächst trockenen und zumeist pulverförmigen Mörtel eine teigartige bzw. pastöse Konsistenz verliehen werden. In dieser Form kann der Mörtel auf einen erfindungsgemäßen Träger aufgebracht werden. Nach dem Abtrocknen des Lösungsmittels bleibt der Mörtel in den Maschen bzw. Poren des Trägers haften und bildet gemeinsam mit dem Träger ein sowohl in Längs- als auch in Querrichtung biegsames Mörtelband. Der in den Maschen bzw. Poren des Trägers haftende Mörtel bildet dabei ein Mörtelband, das im Zuge der Benetzung durch Wasser dem Wasser viele Eintritts- bzw. Durchtrittsöffnungen bietet. Aufgrund der so geschaffenen großen Kontaktfläche des dem Träger anhaftenden Mörtels für das Wasser wird eine kurze Reaktionszeit und ein rasches Abbinden des Mörtels ermöglicht. Eine Wasserlöslichkeit des Trägers ist hierfür nicht erforderlich.

Der Mörtel bedarf jedoch eines geeigneten Trägers, für den ein biegsamer, bandförmiger Träger mit maschenförmiger oder offenporiger Oberfläche vorgeschlagen wird, wobei die Maschen oder Poren des bandförmigen Trägers Ein- und/oder Durchtrittsöffnungen für den Mörtel bilden. Nach einer kurzen Trocknungszeit haftet der getrocknete Mörtel in den Maschen bzw. Poren des Trägers und bildet mit den Maschen und Poren des Trägers eine Mörtelschicht. Durch geeignete Additive kann eine ausreichende Biegsamkeit des Mörtelbandes sicher gestellt werden, wie noch näher ausgeführt werden wird.

Die Maschen können dabei jene eines netzartig ausgeführten Trägers sein, oder jene eines Gewebes oder Gewirkes. Ferner haben sich im Rahmen der Erfindung neben diesen flächenförmigen Trägern auch Träger mit größerer Bandstärke als geeignet erwiesen, etwa vliesartige Träger. Träger dieser Art weisen Hohlräume auf, die den Träger durchsetzen und in der Oberfläche münden. Die Oberfläche solcher Träger ist somit offenporig beschaffen. Die Maschen oder Poren des bandförmigen Trägers müssen jedenfalls erfindungsgemäß in Größe und Form so beschaffen sein, dass sie Ein- und/oder Durchtrittsöffnungen für den Mörtel bilden, um gemeinsam mit den Maschen und Poren des Trägers eine zu beiden Seiten des bandförmigen Trägers freiliegende Mörtelschicht zu bilden, die den Träger durchdringt. Der Mörtel kann somit den Träger durchsetzen und wird von ihm auf diese Weise ausreichend fixiert.

Das erfindungsgemäße Mörtelband kann zur Errichtung eines Mauerwerks verwendet werden, indem es etwa auf die jeweils oberste Ziegelreihe eines Mauerwerks aufgelegt und mit Wasser benetzt wird. Es eignet sich dabei grundsätzlich auch für andere Bausteine und Baustoffe wie etwa Betonsteine oder Kalksandsteine. Das erfindungsgemäße Mörtelband kann zudem neben dem Einsatz zur Verbindung von Baustoffen aller Art auch dort eingesetzt werden, wo bereits in herkömmlicher Weise Mörtel oder Betone spaltüberbrückend verwendet werden. Des Weiteren ist auch die Verwendung als konstruktives Element z.B. durch Umwickeln, Ummanteln, oder Laminieren denkbar, sowie zur Beschichtung von Bauteilen aller Art.

Das erfindungsgemäße Mörtelband besteht somit aus einem bandförmigen Träger, auf dem der zunächst teigförmige/pastöse bzw. hochviskose Mörtel aufgebracht wird. Die Herstellung eines solchen Mörtelbandes kann etwa durch Aufwalzen oder Aufspritzen eines solcherart beschaffenen Mörtels auf den Träger erfolgen. Alternativ kann der Auftrag bei entsprechender Viskosität der Mörtelsuspension aber auch mittels Tauchverfahren oder Extrudieren erfolgen. Des weiteren könnte der Auftrag auch durch temporäre Änderung der rheologischen Eigenschaften durchgeführt werden, indem man den pastösen Mörtel in hochfrequente Schwingungen versetzt. Dadurch wird der oben beschriebene pastöse Mörtel flüssig, und der Auftrag auf den Träger kann erfolgen. Nach Abklingen der Schwingungen erstarrt der Mörtel wieder.

Des Weiteren wird eine Ausführungsform vorgeschlagen, bei der zwei biegsame, bandförmige Träger vorgesehen sind, zwischen denen der Mörtel angeordnet ist, wobei der Mörtel die biegsamen, bandförmigen Träger durchdringt. Eine solche Ausführungsform erleichtert die maschinelle Herstellung des Mörtelbandes, da etwa ein Anhaften des zunächst pastösen Mörtels an Transportwalzen und dergleichen verringert werden kann. Die beiden Träger können in weiterer Folge auch im Bereich ihrer Längskanten miteinander verbunden werden, um seitlichen Austritt des Mörtels hintanzuhalten. Nach der Trocknung des Mörtels verbindet sich der Mörtel fest mit dem Trägermaterial.

Vorzugsweise ist der Träger aus einem biologisch abbaubaren Material gefertigt, etwa aus Baumwolle, um die Entsorgung von nicht benötigtem Mörtelband oder von verarbeiteten Mörtelbändern nach Abriss eines Mauerwerks zu erleichtern. Des Weiteren haben sich auch Träger aus mineralischen Materialien, etwa in Form eines Glasvlies, als vorteilhaft erwiesen.

Um die Lagerung und den Transport der erfindungsgemäßen Mörtelbänder zu erleichtern wird ferner vorgeschlagen, dass der Träger mit dem Mörtel zu einer, von einer luft- und/oder spritzwasserdichten Verpackung umhüllten Rolle aufgewickelt ist. Diese rollenförmige Anordnung ist einerseits platzsparend, eignet sich jedoch auch zur materialsparenden Umhüllung mit einer luft- und/oder spritzwasserdichten Verpackung. Eine solche luft- und/oder spritzwasserdichte Verpackung ermöglicht auch längere Lagerzeiten ohne Beeinträchtigung der Qualität des Mörtelbandes durch Eindringen von Feuchtigkeit.

Das erfindungsgemäße Mörtelband ist in der Lage eine Mörtelverbindung zwischen Ziegeln vollflächig und somit die Ziegellochung überdeckend herzustellen. Dazu sei erklärend festgehalten, dass für die Qualität eines Mauerwerkes in Bezug auf die Festigkeit eine vollflächige Vermörtelung ausschlaggebend ist, da Druckkräfte über alle Ziegelstege aufgenommen und abgeleitet werden können. Der vollflächige Verschluss bewirkt zudem auch eine Kapselung der Luft in den Löchern der Ziegel. Somit wird eine vertikale Luftströmung unterbunden, welche für die Dichtigkeit des Mauerwerkes nicht unerheblich ist. Allerdings stellt generell jede Vermörtelung aufgrund der höheren Wärmeleitfähigkeit des Mörtels eine thermische Schwachstelle dar. Somit ist jede Verbindung von Ziegeln (oder auch anderer Bausteine) thermisch umso besser, je dünner diese Verbindung ist. Im Fall der vorliegenden Erfindung wird ein Mörtelband verwendet, das mit geringer Schichtstärke gefertigt werden kann, vorzugsweise mit einer Schichtstärke von 2 - 3 mm, die sich durch das Einsinken der auf dem Band liegenden Ziegeln in das nasse Mörtelband an den Kontaktflächen der Ziegel zusätzlich auf rund 1 - 1,5 mm reduziert.

Die Schichtstärke des Mörtelbandes ist aber grundsätzlich vom Einsatzzweck und von der Form und Beschaffenheit jener Bauteile, die mit dem erfindungsgemäßen Mörtelband versehen werden sollen, abhängig. Bei ungeschliffenen Ziegeln etwa sind größere Schichtstärken vorteilhaft, um die Ungleichmäßigkeiten der Ziegeloberflächen auszugleichen.

Die Erfindung wird in weiterer Folge anhand von Ausführungsbeispielen mithilfe der beiliegenden Zeichnungen näher erläutert. Es zeigen hierbei die
Fig. 1 eine schematische Schnittansicht einer ersten Ausführungsform eines erfindungsgemäßen Mörtelbandes,
Fig. 2 eine schematische Schnittansicht einer weiteren Ausführungsform eines erfindungsgemäßen Mörtelbandes, und die
Fig. 3 die Anordnung des erfindungsgemäßen Mörtelbandes in Gebrauchslage.

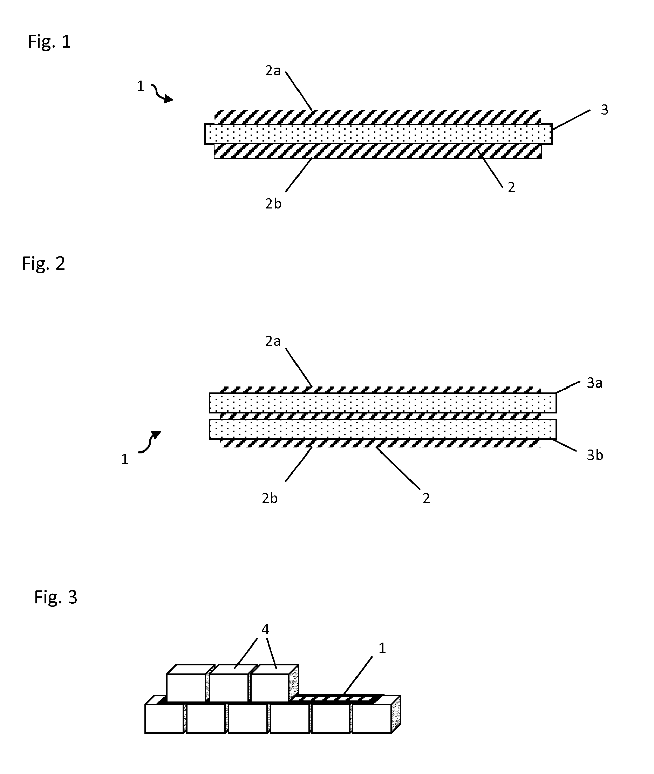

Die Fig. 1 zeigt ein Mörtelband 1 mit einem Träger 3 und dem aufgetragenen Mörtel 2, der eine zu beiden Seiten des bandförmigen Trägers 3 freiliegende Mörtelschicht bildet, die den Träger 3 durchdringt und somit eine erste Mörtelschichtoberfläche 2a und eine zweite Mörtelschichtoberfläche 2b bildet. Beim Auftragen des zunächst pastösen Mörtels 2 im Zuge der Herstellung des gezeigten Mörtelbandes durch Aufspritzen oder Aufwalzen, oder auch durch alternative Verfahren wie Tauch-, Extrusions- oder Hochfrequenzvibrationsverfahren dringt der Mörtel 2 in die Poren oder Maschen des Trägers 3 ein und bleibt aufgrund seiner hohen Viskosität in ihnen haften, wobei er den Träger 3 durchsetzt. Der Auftrag kann dabei ein- oder beidseitig erfolgen, da auch bei einseitigem Auftrag aufgrund der Maschen- oder Porengröße des Trägers 3 pastöser Mörtel 2 den Träger 3 durchsetzt und auch auf die jeweils gegenüberliegende Seite des bandförmigen Trägers 3 gelangt. Ein solches Mörtelband 1 kann in Form einer Rolle aufgewickelt werden und etwa mit einer luft- und/oder spritzwasserdichten Verpackung für Transport und Lagerung versehen werden.

Der Mörtel 2 entspricht in der Regel herkömmlichen Zusammensetzungen und wird zur Herstellung einer pastösen Masse mit einem Lösungsmittel und Additiven vermengt, bei dem es sich aber nicht um Wasser handelt, um ein Aushärten des Mörtels 2 zu vermeiden. Als Lösungsmittel kann etwa ein Gemisch eines Alkohols mit einem geeigneten Additiv wie etwa Celluloseether verwendet werden. Das Additiv stellt eine ausreichende Verfestigung und Biegsamkeit in Längs- und Querrichtung der nach dem Auftrag getrockneten Mörtelschicht sicher. Die Menge des hinzugefügten Lösungsmittels ist dabei von der gewünschten Viskosität des pastösen Mörtels 2 abhängig, die wiederum durch den ausgewählten Träger 3 und der Größe und Form seiner Maschen bzw. Poren bestimmt ist, sowie durch die Art der Verarbeitung des Mörtels und seinem Auftrag auf den Träger 3 durch Aufwalzen, Aufspritzen, Extrudieren oder andere Verfahren wie etwa Tauch- oder Hochfrequenzvibrationsverfahren.

Die Fig. 2 zeigt eine weitere Ausführungsform eines erfindungsgemäßen Mörtelbandes 1 mit Mörtel 2, der zwischen zwei bandförmige Träger 3a und 3b angeordnet ist, wobei der Mörtel 2 die biegsamen, bandförmigen Träger 3a, 3b durchdringt. Bei den beiden Trägern 3a und 3b handelt es sich etwa um ein Gewebe, dessen Maschen Durchtrittsöffnungen bilden und etwa aus Baumwolle gefertigt ist. Freilich können aber auch andere entsprechend geeignete Gewebe oder Gewirke wie etwa aus Kunststoff, oder ein Vlies verwendet werden. Beim Auftragen des zunächst pastösen Mörtels 2 durch Aufwalzen, Aufspritzen, Extrudieren oder andere Verfahren wie etwa Tauch- oder Hochfrequenzvibrationsverfahren füllt der Mörtel 2 aufgrund seiner, je nach Auftragsverfahren eingestellten Viskosität die Maschen und bleibt in ihnen haften, wobei er die beiden Träger 3a und 3b durchsetzt. Die Ausführungen bezüglich des Mörtels 2 zu Fig. 1 gelten auch für die Ausführungsform gemäß Fig. 2. Die Fig. 1 und 2 sind ferner jeweils so zu verstehen, dass der Mörtel 2 den Träger 3 bzw. die beiden Träger 3a, 3b durchdringt und eine zu beiden Seiten des bandförmigen Trägers 3 freiliegende Mörtelschicht mit einer ersten, freiliegenden Mörtelschichtoberfläche 2a und einer zweiten, freiliegenden Mörtelschichtoberfläche 2b bildet.

Die Fig. 3 zeigt einen Ausschnitt eines Mauerwerks mit Mauersteinen 4 und der Anordnung eines erfindungsgemäßen Mörtelbandes 1. Das erfindungsgemäße Mörtelband 1 wird im Zuge der Errichtung des Mauerwerks auf die aktuell oberste Mauersteinreihe aufgelegt, wobei es nach Wunsch zugeschnitten werden kann. Das biegsame Mörtelband 1 ist ansonsten nach dem Auflegen sofort verarbeitungsbereit. Bei der Benetzung des Mörtelbandes 1 mit Wasser erfolgt unmittelbarer Wasserkontakt mit dem Mörtel 2 der zu beiden Seiten des bandförmigen Trägers 3 freiliegenden Mörtelschicht, indem das Anmachwasser das Mörtelband 1 von oben nach unten durchdringt, sodass die Härtungsreaktion sofort in Gang gesetzt wird, ohne ein vorheriges Auflösen einer wasserlöslichen Schutzfolie oder dergleichen zu erfordern. Da der Mörtel 2 in den Maschen bzw. Poren des Trägers 3 fest haftet, kann er im Zuge der Benetzung mit Wasser auch nicht aus der Lagerfuge ausgeschwemmt werden. Die Errichtung des Mauerwerks wird auf diese Weise erheblich vereinfacht, sodass sich die erforderliche Arbeitszeit sowie die Kosten hierfür reduzieren.

## Patentansprüche

1. Mörtelband (1) mit Mörtel (2) und einem Träger (3) für den Mörtel (2), der als biegsamer, bandförmiger Träger (3) mit maschenförmiger oder offenporiger Oberfläche ausgeführt ist, wobei die Maschen oder Poren des bandförmigen Trägers (3) Ein-und/oder Durchtrittsöffnungen für den Mörtel (2) bilden, **dadurch gekennzeichnet, dass** der Mörtel mit den Maschen oder Poren des Trägers (3) eine zu beiden Seiten des bandförmigen Trägers (3) freiliegende, sowohl in Längs- als auch in Querrichtung biegsame Mörtelschicht bildet, die den Träger (3) durchdringt.

2. Mörtelband (1) nach Anspruch 1, **dadurch gekennzeichnet, dass** zwei biegsame, bandförmige Träger (3a, 3b) vorgesehen sind, zwischen denen der Mörtel (2) angeordnet ist, wobei der Mörtel (2) die biegsamen, bandförmigen Träger (3a, 3b) durchdringt.

3. Mörtelband (1) nach Anspruch 2, **dadurch gekennzeichnet, dass** die beiden Träger (3a, 3b) im Bereich ihrer Längskanten miteinander verbunden sind.

4. Mörtelband (1) nach einem der Ansprüche 1 bis 3, **dadurch gekennzeichnet, dass** der Träger (3) aus einem biologisch abbaubaren Material oder einem mineralischen Material gefertigt ist.

5. Mörtelband (1) nach einem der Ansprüche 1 bis 4, **dadurch gekennzeichnet, dass** der Träger (3) mit dem Mörtel (2) zu einer, von einer luft- und/oder spritzwasserdichten Verpackung umhüllten Rolle aufgewickelt ist.

6. Mörtelband (1) nach einem der Ansprüche 1 bis 5, **dadurch gekennzeichnet, dass** die gemeinsame Schichtdicke des Trägers (3) und des schichtförmig gebundenen Mörtels (2) 2-3 mm beträgt.
